Europäisches Patentamt

European Patent Office

Office européen des brevets

(11) Veröffentlichungsnummer: **0 151 290**
**B1**

# (12) EUROPÄISCHE PATENTSCHRIFT

(45) Veröffentlichungstag der Patentschrift:
**07.10.87**

(21) Anmeldenummer: **84115713.4**

(22) Anmeldetag: **18.12.84**

(51) Int. Cl.⁴: **C 14 C  3/18,** C 14 C  3/28,
C 08 G  12/08, C 08 G  12/40

(54) **Amphotere Kondensationsprodukte und ihre Anwendung in der Nachgerbung.**

(30) Priorität: **24.01.84  DE 3402265**

(43) Veröffentlichungstag der Anmeldung:
**14.08.85 Patentblatt 85/33**

(45) Bekanntmachung des Hinweises auf die Patenterteilung:
**07.10.87 Patentblatt 87/41**

(84) Benannte Vertragsstaaten:
**CH DE FR GB IT LI**

(56) Entgegenhaltungen:
DE - B - 1 247 328
FR - A - 2 438 089
GB - A - 2 070 632

**Die Akte enthält technische Angaben, die nach dem
Eingang der Anmeldung eingereicht wurden und die
nicht in dieser Patentschrift enthalten sind.**
(73) Patentinhaber: **BASF Aktiengesellschaft,
Carl-Bosch-Strasse 38, D-6700 Ludwigshafen (DE)**

(72) Erfinder: **Lach, Dietrich, Dr.-Chem., Gartenweg 16,
D-6701 Friedelsheim (DE)**
Erfinder: **Streicher, Rolf, Rudolf-Heilgers-Strasse 8,
D-6520 Worms 15 (DE)**
Erfinder: **Strickler, Rainer, Dr.-Chem.,
Erwin-Rohde-Strasse 20, D-6900 Heidelberg (DE)**

ACTORUM AG

## Beschreibung

Die Erfindung betrifft ein Verfahren zum Nachgerben und Färben von mineralisch gegerbten Ledern mit Gerbstoffen auf der Basis von Kondensaten von aromatischen Aminen zusammen mit synthetischen Gerbstoffen.

Es sind synthetische Gerbstoffe bekannt, die durch Kondensation von aromatischen Sulfonsäuren mit Aldehyden, insbesondere Formaldehyd, hergestellt werden. Sie ergeben weiche, gut gefüllte Leder und sind einfach in der Anwendung. Die so gegerbten oder nachgegerbten Leder sind jedoch schwierig mit anionischen Farbstoffen in satten Tönen zu färben.

Zur Nachgerbung von Ledern können auch beispielsweise die synthetischen Gerbstoffe gemäss der DE-A-2 843 233 verwendet werden. Diese Gerbstoffe verbessern insbesondere die Färbbarkeit damit gegerbter oder nachgegerbter Leder mit anionischen Farbstoffen. Sie haben jedoch den Nachteil, dass sie sich mit synthetischen Gerbstoffen beispielsweise auf Basis Phenolsulfonsäure, Naphthalinsulfonsäure oder Naphtholsulfonsäure nicht kombinieren lassen, ohne dass ihr vorteilhafter Einfluss auf die Färbbarkeit des Leders fast völlig verloren geht. D.h. dass die aufhellende Wirkung der Kombination aus konventionellem synthetischem Gerbstoff und einem Gerbstoff gemäss dem genannten Stand der Technik überwiegend durch den konventionellen synthetischen Gerbstoff bestimmt wird.

In der GB-A-2 070 682 werden Mischungen eines aluminiumhaltigen Gerbstoffs mit einem als Gerbstoff verwendeten Kondensationsprodukt aus aromatischen Aminen beschrieben, wobei auf Seite 2, Zeilen 67-69, ausdrücklich hervorgehoben wird, dass bei alleiniger Verwendung der beschriebenen Kondensationsprodukte als Gerbstoff die Färbeeigenschaften des Leders nicht zufriedenstellen.

Der vorliegenden Erfindung liegt die Aufgabe zugrunde, Gerbstoffe zu entwickeln, die auch in Kombination mit konventionellen Syntanen ihren günstigen Einfluss auf die Färbbarkeit des Leders behalten.

Die Lösung der Aufgabe besteht in einem Verfahren zum Nachgerben und Färben von mineralisch gegerbten Ledern, wie es in den Ansprüchen 1 und 2 definiert wird.

Die im erfindungsgemässen Verfahren verwendeten amphoteren Kondensationsprodukte können nach verschiedenen Verfahren hergestellt werden:

Beispielsweise kann man ein aromatisches Amin der allgemeinen Formel II

$$
\begin{array}{c}
X \\
| \\
R-N \\
| \\
H_{o+1}-A \\
\diagup \quad \diagdown \\
Z_q \qquad Y_p
\end{array}
\qquad II
$$

in der A, R, X, Y, Z, p, q und o die für Formel I angegebenen Bedeutungen haben, mit Formaldehyd und gegebenenfalls einer oder mehrerer Verbindungen aus der Gruppe Harnstoff, Biuret, Dicyandiamid oder Melamin gegebenenfalls in Gegenwart von Sulfit kondensiert.

Gemäss einer Variante dieses Herstellungsverfahrens kann man zunächst ein aromatisches Amin der Formel III

$$
\begin{array}{c}
H \\
| \\
R-N \\
| \\
H_{o+1}-A \\
\diagup \quad \diagdown \\
Y \qquad Z
\end{array}
\qquad III
$$

in der R ein Wasserstoffatom oder einen Alkylrest mit 1 bis 4 C-Atomen und Z, Y und o die für Formel I angegebenen Bedeutungen aufweisen, mit einem alkylierend wirkenden Derivat einer Carbonsäure entsprechend dem Rest X umsetzt und das erhaltene Amin der allgemeinen Formel II ohne vorherige Isolierung zu einem Kondensationsprodukt der Formel I umsetzt.

Für den Fall, dass in dem amphoteren Kondensationsprodukt der Formel II Y den Rest $-CH_2SO_3H$ bedeutet, kann man so vorgehen, dass man zunächst eine Verbindung der Formel I, in der Y ein Wasserstoffatom bedeutet, herstellt und danach durch eine Sulfomethylierung den Rest $-CH_2SO_3H$ einführt. Dabei ist es möglich, dass nur bei einem Tel des Ausgangsmaterials Sulfomethylgruppen eingebaut werden, so dass ein Gemisch von erfindungsgemässen Kondensationsprodukten mit und ohne Methylensulfonsäuregruppen entsteht.

Als weiteres Herstellungsverfahren kommt in Betracht, dass man zunächst ein aromatisches Amin der allgemeinen Formel III mit Formaldehyd und gegebenenfalls einer oder mehrerer Verbindungen aus der Gruppe Harnstoff, Biuret, Dicyandiamid oder Melamin kondensiert und dann mit einem alkylierend wirkenden Derivat einer niedermolekularen Carbonsäure, insbesondere eines Halogenderivates, entsprechend der Bedeutung des Restes X umsetzt.

Die Kondensationsreaktionen werden vorzugsweise in wässrigen Lösungen bei Temperaturen von 40 bis 140 °C, vorzugsweise bei 60 bis 100 °C, und pH-Werten von 4 bis 9, vorzugsweise von 5 bis 8, durchgeführt. Die erhaltenen Lösungen können häufig bereits in dieser Form für die erfindungsgemässe Verwendung eingesetzt werden. Andererseits können die erfindungsgemässen Kondensationsprodukte ohne weiteres in fester pulverförmiger Form erhalten werden, wozu sich vor allem das Verfahren der Sprühtrocknung eignet. Für den Fall, dass die Verbindungen der Formel I in fester Form isoliert werden sollen, ist es selbstverständlich vorteilhaft, wenn möglichst in konzentrierten Lösungen gearbeitet wird. Dabei können ohne Schwierigkeiten Reaktionslösungen mit 50% Feststoffanteilen an einer Verbindung der Formel I erhalten werden.

Es sei erwähnt, dass die angegebenen Verfahrensmassnahmen für die durchzuführenden Kondensationsreaktionen in an sich bekannter Weise erfolgen,

wobei vermerkt wird, dass bei den beschriebenen Kondensationsreaktionen teilweise Gemische entstehen, wie jedem Fachmann auf diesem Gebiet bekannt ist.

Wenn A einen Naphthylring darstellt, ist es besonders vorteilhaft, im Hinblick auf eine ausreichende Löslichkeit in wässrigen Medien, dass Y den Rest $SO_3H$ bedeutet.

Für den einzubauenden Rest B sind Hanrstoff und Melamin besonders bevorzugt. Darüber hinaus werden sehr gute Ergebnisse mit Mischungen aus Harnstoff und Melamin erhalten.

Für X ist der Essigsäurerest besonders bevorzugt. Der Rest X wird zweckmässigerweise durch eine Substitutionsreaktion mit einer entsprechenden Halogencarbonsäure, insbesondere aliphatische Chlorcarbonsäure, eingeführt.

Besonders bevorzugte Bedeutungen für R sind Wasserstoff und für Y -$CH_2$-$SO_3H$, wobei ein vorhandener Benzolring für A gegebenenfalls nur durch einen Substituenten substituiert ist.

Der besondere Vorteil des erfindungsgemässen Verfahrens ist, dass Kombinationen mit den bekannten und viel verwendeten synthetischen Gerbstoffen möglich sind, wobei man ausserordentlich egale und farbstarke Lederfärbungen erhält. Dies ist ein überraschender und in keiner Weise vorhersehbarer Effekt. Als bekannte synthetische Gerbstoffe werden besonders synthetische Gerbstoffe auf Basis Phenolsulfonsäure, Naphthalinsulfonsäure und/oder Naphtholsulfonsäure verwendet.

In der Regel wird das Verfahren zum Nachgerben und Färben von mineralisch gegerbten Ledern so durchgeführt, dass man entsäuertes mineralisch gegerbtes Leder in wässrigem Medium mit 0,5 bis 15%, berechnet auf das Falzgewicht, Kondensationsprodukt der Formel I in einer Flottenlänge von 50 bis 600% Wasser, bezogen auf das Falzgewicht, bei Temperaturen von 15 bis 60°C innerhalb von 10 bis 180 Minuten und anschliessend mit einem konventionellen synthetischen Gerbstoff und/oder einem anionischem Polymergerbstoff auf der Basis Acrylsäure, Maleinsäureanhydrid oder Methacrylsäure oder deren Copolymerisaten mit anderen ethylenisch ungesättigten Monomeren behandelt, danach gegebenenfalls mit einem üblichen Lederfettungsmittel fettet, anschliessend einen pH-Wert von 3 bis 4,5, bevorzugt von 3,5 bis 4,0, einstellt und das Leder färbt.

Dabei kommen insbesondere 1 bis 10%, besonders bevorzugt 2 bis 5%, berechnet auf das Falzgewicht, Kondensationsprodukt der Formel I, Flottenlängen vorzugsweise von 100 bis 400% Wasser, bezogen auf das Falzgewicht, Temperaturen insbesondere von 25 bis 50°C und besonders bevorzugt 35 bis 45°C und Zeiten von 10 bis 90 Minuten in Betracht. Der pH-Wert wird zweckmässig mit einer niederen aliphatischen Carbonsäure, insbesondere Ameisensäure oder Essigsäure, eingestellt.

Als Farbstoffe werden handelsübliche anionische Farbstoffe und als Fettlicker handelsübliche Fettungsmittel auf nativer und/oder synthetischer Basis verwendet.

Die in den Beispielen genannten Teile sind Gewichtsteile, auch die Prozente beziehen sich auf das Gewicht, sofern nichts anderes angegeben.

Die in den Beispielen genannten Einsatzstoffe, abgesehen von den Gerbstoffen der Formel I, sind handelsüblich.

*Beispiel 1*

48 Teile Chloressigsäure werden in 140 Teilen Wasser gelöst und mit 80 Teilen 50%iger Natronlauge neutralisiert. Anschliessend tropft man innerhalb 15 Minuten 54 Teile o-Toluidin zu und rührt 120 Minuten bei 95°C nach. Nun werden 30 Teile Harnstoff eingesetzt und 100 Teile einer 30%igen wässrigen Formaldehydlösung innerhalb von 30 Minuten bei einer Temperatur von 90°C zugetropft. Man rührt noch 60 Minuten bei 90°C nach und isoliert den Gerbstoff schliesslich durch Sprühtrocknung.

*Anwendungsbeispiel I*

Der gemäss Beispiel 1 erhaltene Gerbstoff wird folgendemassen zur Nachgerbung eingesetzt: Zunächst werden 100 Teile falzfeuchtes Chromleder der Falzstärke 1,5 mm in 100 Teilen Wasser bei 30°C mit 1 Teil Natriumformiat und 0,4 Teilen Natriumbicarbonat in einem Wackerfass entsäuert. Anschliessend wird in 100 Teilen frischer wässriger Flotte bei einer Temperatur von 40°C zunächst mit 3 Teilen des Gerbstoffs gemäss Beispiel 1 10 Minuten gewalkt, danach werden 4 Teile eines handelsüblichen Weissgerbstoffs nachgesetzt und weitere 60 Minuten gewalkt. Anschliessend wird in 200 Teilen frischer Flotte bei einer Temperatur von 50°C mit 0,5 Teilen Ameisensäure abgesäuert und nach 10 Minuten Walkzeit 1 Teil Acid Brown 165 zugesetzt. Nach weiteren 20 Minuten Walkzeit werden 4 Teile eines handelsüblichen Fettlickers in die Flotte gegeben. Nachdem weitere 40 Minuten gewalkt worden war, wird schliesslich mit 0,5 Teilen Ameisensäure abgesäuert. Das Leder wird schliesslich getrocknet und in üblicher Weise fertiggestellt.

Zum Vergleich wird ein zweites Leder in genau gleicher Weise nachgegerbt, gefärbt und gefettet, nur wird statt des Gerbstoffs gemäss Beispiel 1 ein handelsübliches kleinteiliges Syntan auf Basis Phenolsulfonsäure verwendet.

Das erfindungsgemäss behandelte Leder war deutlich tiefer gefärbt.

*Beispiel 2.*

48 Teile Chloressigsäure werden in 130 Teilen Wasser gelöst und mit 80 Teilen 50%iger Natronlauge neutralisiert. Anschliessend tropft man innerhalb 5 Minuten 46,5 Teile Anilin zu und rührt 60 Minuten bei 90°C nach. Anschliessend werden 47,5 Teile Natriumdisulfit zugesetzt und nochmals 60 Minuten bei 95°C nachgerührt. Nun werden 30 Teile Harnstoff hinzugefügt und 100 Teile einer 30%igen wässrigen Formaldehydlösung innerhalb 60 Minuten bei einer Temperatur von 70°C zugetropft und dann noch 120 Minuten bei einer Temperatur von 80°C gerührt. Anschliessend wird der Gerbstoff durch Sprühtrocknung isoliert.

*Anwendungsbeispiel II*

Der gemäss Beispiel 2 erhaltene Gerbstoff wird folgendermassen zur Nachgerbung eingesetzt: Zunächst werden 100 Teile falzfeuchtes Chromleder

der Falzstärke 0,9 mm in 100 Teilen Wasser bei 30°C mit 1 Teil Natriumformiat und 0,4 Teilen Natriumbicarbonat in einem Wackerfass entsäuert. Anschliessend wird in 200 Teilen frischer wässriger Flotte bei einer Temperatur von 50°C zunächst mit 5 Teilen des Gerbstoffs gemäss Beispiel 2 10 Minuten gewalkt, danach werden 4 Teile eines handelsüblichen Vollgerbstoffs nachgesetzt und weitere 60 Minuten gewalkt. Anschliessend wird in 200 Teilen frischer Flotte bei einer Temperatur von 50°C mit 0,5 Teilen Ameisensäure abgesäuert und nach 10 Minuten Walkzeit 1 Teil Acid Brown 321 zugesetzt. Nach weiteren 20 Minuten Walkzeit werden 4 Teile eines handelsüblichen Fettlickers in die Flotte gegeben. Nachdem weitere 40 Minuten gewalkt worden war, wird schliesslich mit 0,5 Teilen Ameisensäure abgesäuert. Das Leder wird schliesslich getrocknet und wie üblich fertiggestellt.

Zum Vergleich wird ein zweites Leder in genau gleicher Weise nachgegerbt, gefärbt und gefettet, nur wird statt des Gerbstoffs gemäss Beispiel 2 das Produkt gemäss DE-A-2 843 233, Beispiel 7, eingesetzt.

Das erfindungsgemäss behandelte Leder war deutlich tiefer gefärbt.

### Beispiel 3

Zu 48 Teilen Chloressigsäure und 46,5 Teilen Anilin in 130 Teilen Wasser werden bei 95°C innerhalb von 15 Minuten 80 Teile 50%iger Natronlauge zugetropft. Danach wird 30 Minuten bei 95°C nachgerührt. Anschliessend werden 47,5 Teile Natriumdisulfit zugegeben und weitere 20 Minuten bei 95°C gerührt. Schliesslich werden noch 20 Teile Harnstoff und 10 Teile Melamin hinzugefügt und 100 Teile einer 30%igen wässrigen Formaldehydlösung innerhalb 30 Minuten bei einer Temperatur von 80°C zugetropft. Zum Schluss wird noch 1 Stunde bei 95°C nachgerührt. Die erhaltene Lösung wird danach sprühgetrocknet.

### Anwendungsbeispiel III

Der Gerbstoff des Beispiels 3 wurde analog Beispiel I eingesetzt, nur wurde die Nachgerbung bei 30°C in einer Flotte von 200 Teilen durchgeführt. Das Ergebnis entsprach dem des Beispiels I.

### Beispiel 4

Zu 48 Teilen Chloressigsäure und 46,5 Teilen Anilin in 130 Teilen Wasser werden bei 95°C innerhalb von 15 Minuten 80 Teile 50%iger Natronlauge zugetropft. Danach wird 30 Minuten bei 95°C nachgerührt. Anschliessend werden 47,5 Teile Natriumdisulfit zugegeben, 20 Minuten bei 95°C gerührt und noch 10 Teile Harnstoff und 10 Teile Melamin hinzugefügt sowie bei 70°C noch 100 Teile einer 30%igen wässrigen Formaldehydlösung zugetropft. Schliesslich wird noch 90 Minuten bei 90°C gerührt und die erhaltene Lösung sprühgetrocknet.

### Anwendungsbeispiel IV

Der Gerbstoff des Beispiels 4 wurde analog Beispiel II eingesetzt. Das Ergebnis entsprach dem des Beispiels II.

### Beispiel 5

Zu einer Lösung von 60 Teilen des Natriumsalzes der Chloressigsäure in 144 Teilen Wasser werden 46,5 Teile Anilin gegeben. Nachdem 30 Minuten bei 95°C gerührt worden war, werden innerhalb von 20 Minuten 20 Teile 50%iger Natronlauge zugetropft. Anschliessend werden 60 Teile Natriumdisulfit zugegeben und noch 30 Minuten bei 95°C gerührt. Schliesslich werden 20 Teile Harnstoff und 10 Teile Melamin hinzugefügt und 50 Teile einer 30%igen Formaldehydlösung zugetropft. nachdem noch 60 Minuten bei 95°C nachgerührt worden war, wurde die Lösung sprühgetrocknet.

### Anwendungsbeispiel V

Der gemäss Beispiel 5 erhaltene Gerbstoff wird folgendermassen zur Nachgerbung eingesetzt: Zunächst werden 100 Teile chromgegerbtes Schafleder in 200 Teilen Wasser bei 35°C mit 1 Teil Natriumformiat und 0,4 Teilen Natriumbicarbonat in einem Wackerfass entsäuert. Anschliessend wird in 400 Teilen frischer wässriger Flotte bei einer Temperatur von 40°C zunächst mit 10 Teilen des Gerbstoffs gemäss Beispiel 5 10 Minuten gewalkt, danach werden 8 Teile eines handelsüblichen Weissgerbstoffs nachgesetzt und weitere 60 Minuten gewalkt. Anschliessend wird in 400 Teilen frischer Flotte bei einer Temperatur von 50°C zunächst mit 0,5 Teilen Ameisensäure abgesäuert und nach 10 Minuten Walkzeit 2 Teile Acid Brown 161 zugesetzt. Nach weiteren 20 Minuten Walkzeit werden 8 Teile eines handelsüblichen Fettlickers in die Flotte gegeben. Nachdem weitere 40 Minuten gewalkt worden war, wird schliesslich mit 0,5 Teilen Ameisensäure abgesäuert. Das Leder wird schliesslich getrocknet und wie üblich fertiggestellt.

Zum Vergleich wurde ein zweites Leder in genau gleicher Weise nachgegerbt, gefärbt und gefettet, nur wurde statt des Gerbstoffs gemäss Beispiel 5 das Produkt gemäss DE-A-2 843 233, Beispiel 7, eingesetzt.

Das erfindungsgemäss behandelte Leder war deutlich tiefer gefärbt.

### Beispiel 6

Zu einer Lösung von 48 Teilen Chloressigsäure und 60 Teilen 50%iger natronlauge werden 55,8 Teile Anilin gegeben. Nachdem 60 Minuten bei einer Temperatur von 90°C nachgerührt wurde, fügt man 20 Teile 50%ige Natronlauge und 47,5 Teile Natriumdisulfit hinzu. Anschliessend wird 120 Minuten bei 90°C nachgerührt und dann 30 Teile Harnstoff zugegeben sowie 100 Teile 30%ige wässrige Formaldehydlösung innerhalb 30 Minuten bei 90°C zugetropft. Schliesslich wird noch 210 Minuten bei 90°C gerührt und die erhaltene Lösung danach sprühgetrocknet.

### Anwendungsbeispiel VI

Der gemäss Beispiel 6 erhaltene Gerbstoff wird folgendermassen zur Nachgerbung eingesetzt. Zunächst werden 100 Teile falzfeuchtes Chromrindleder der Falzstärke 2,0 mm in 100 Teilen Wasser bei 30°C mit 1,5 Teil Natriumformiat und 0,5 Teilen Natriumbicarbonat in einem Wackerfass entsäuert. Anschliessend wird das Leder in 100 Teilen frischer wässriger Flotte bei einer Temperatur von 30°C zu-

nächst mit 3 Teilen des Gerbstoffs des Beispiels 6 10 Minuten gewalkt, dann werden 2 Teile eines anionischen Polymergerbstoffs auf Basis Acrylsäure-Acrylnitril nachgesetzt, schliesslich werden noch 3 Teile eines synthetischen Gerbstoffs auf basis Phenolsulfonsäure und 2 Teile eines handelsüblichen Harzgerbstoffs sowie 1 Teil Mimosa-Gerbstoff in die Flotte gegeben. Nun wird noch weitere 40 Minuten gewalkt.

Danach wird in 200 Teilen frischer Flotte bei einer Temperatur von 50°C mit 0,7 Teilen Ameisensäure abgesäuert und nach 10 Minuten Walkzeit 1,5 Teile Acid Brown 75 zugesetzt. Nach weiteren 20 Minuten Walkzeit werden 6 Teile eines handelsüblichen Fettlickers in die Flotte gegeben. Nachdem weitere 40 Minuten gewalkt worden war, wird schliesslich mit 1 Teil Ameisensäure abgesäuert. Das Leder wurde schliesslich getrocknet und in üblicher Weise fertiggestellt.

Zum Vergleich wurde ein zweites Leder in genau gleicher Weise nachgegerbt, gefärbt und gefettet, nur wurde statt des Gerbstoffs gemäss Beispiel 6 ein handelsübliches kleinteiliges Syntan auf Basis Phenolsulfonsäure verwendet.

Das erfindungsgemäss behandelte Leder war deutlich tiefer gefärbt.

*Beispiel 7*

46,5 Teile Anilin und 48 Teile Chloressigsäure gelöst in 60 Teilen Wasser werden 30 Minuten bei 70°C gerührt. Anschliessend werden 30 Teile Harnstoff zugegeben und 100 Teile 30%ige wässrige Formaldehydlösung und 55 Teile 50%ige Natronlauge gleichzeitig innerhalb 60 Minuten bei der genannten Temperatur zugetropft. Anschliessend werden 52 Teile Natriumdisulfit zugegeben, 120 Minuten bei 90°C gerührt und dann mit 81,5 Teilen Wasser verdünnt. Man erhält eine 50% wässrige Lösung.

*Anwendungsbeispiel VII*

Die erhaltene Gerbstofflösung wurde analog der im Beispiel I angegebenen Arbeitsweise eingesetzt. Das Ergebnis war vergleichbar vorteilhaft.

*Beispiel 8*

48 Teile Chloressigsäure, 40 Teile 50%ige Natronlauge und 23 Teile Anilin, gelöst in 102 Teilen Wasser, werden 30 Minuten bei 95°C gerührt. Anschliessend werden 30 Teile Harnstoff und 20 Teile 50%ige Natronlauge hinzugefügt sowie 50 Teile 30%ige wässrige Formaldehydlösung innerhalb 30 Minuten bei 90°C zugetropft. Nachdem 120 Minuten bei der gleichen Temperatur gerührt worden war, werden 95 Teile Natriumdisulfit zugegeben, weitere 120 Minuten bei 90°C gerührt und dann mit 73 Teilen Wasser verdünnt. Die erhaltene 50%ige Lösung wird sprühgetrocknet.

*Anwendungsbeispiel VIII*

Der Gerbstoff des Beispiels 8 wurde analog der im Beispiel V angegebenen Arbeitsweise eingesetzt. Nur wurde nicht chromgegerbtes Schafleder, sondern chromgegerbtes Ziegenleder nachgegerbt. Das Ergebnis war jedoch vergleichbar vorteilhaft.

*Beispiel 9*

Zu 90 Teilen des gemischten Natrium-, Kaliumsalzes des Phenylglycins mit dem rechnerischen Molekulargewicht 180, 20 Teilen Ameisensäure und 60 Teilen Harnstoff in 175 Teilen Wasser wird unter Rühren innerhalb 30 Minuten bei 70°C 100 Teile 30%ige wässrige Formaldehydlösung getropft. Anschliessend wird weitere 60 Minuten bei 70°C gerührt und dann 105 Teile Natriumdisulfit hinzugefügt und noch 120 Minuten bei 90°C gerührt. Schliesslich wird mit 40 Teilen Wasser ein Feststoffgehalt von 50% eingestellt und die Lösung dann sprühgetrocknet.

*Anwendungsbeispiel IX*

Der Gerbstoff des Beispiels 9 wurde analog der im Beispiel I angegebenen Arbeitsweise eingesetzt. Das Ergebnis war ähnlich vorteilhaft.

*Beispiel 10*

Zu 180 Teilen des in Beispiel 9 genannten Salzes des Phenylglycins und 120 Teilen Harnstoff in 220 Teilen Wasser werden bei 90°C innerhalb 50 Minuten 200 Teile 30%ige wässrige Formaldehydlösung unter Rühren zugetropft. Nachdem 120 Minuten bei 90°C gehalten worden ist, wird durch Zugabe von 10 Teilen Ameisensäure ein pH-Wert von 8,7 eingestellt. Schliesslich wird nochmals 180 Stunden bei 90°C nachgerührt. Nachdem die erhaltene Lösung auf Raumtemperatur abgekühlt wird, wird mit 5 Teilen Ameisensäure ein pH-Wert von 5,9 eingestellt.

*Anwendungsbeispiel X*

Die erhaltene Gerbstofflösung wurde analog der im Beispiel I angegebenen Arbeitsweise eingesetzt. Das Ergebnis war ähnlich vorteilhaft.

*Beispiel 11*

Die Lösung von 111,5 Teile 1-Amino-naphthalin-6-sulfonsäure, 48 Teilen Chloressigsäure und 80 Teilen 50%ige Natronlauge in 127 Teilen Wasser wird 120 Minuten bei 95°C gerührt. Anschliessend werden 30 Teile Harnstoff zugegeben und 100 Teile 30%ige wässrige Formaldehyd innerhalb 30 Minuten zugetropft. Anschliessend wird mit 115 Teilen Wasser verdünnt und 120 Minuten bei 95°C nachgerührt. Anschliessend werden 95 Teile Natriumdisulfit zugegeben und abschliessend noch 120 Minuten bei 95°C gerührt. Anschliessend wird sprühgetrocknet.

*Anwendungsbeispiel XI*

Der erhaltene Gerbstoff wurde analog der im Beispiel I angegebenen Arbeitsweise eingesetzt. Das Ergebnis war ähnlich vorteilhaft.

*Beispiel 12*

46 Teile α-Chlorpropionsäure werden in 140 Teilen Wasser gelöst und mit 80 Teilen 50%iger Natronlauge versetzt. Anschliessend tropft man innerhalb 5 Minuten 54 Teile o-Toluidin zu und rührt 120 Minuten bei 95°C nach. Nun werden 30 Teile Harnstoff zugesetzt und 100 Teile einer 30%igen wässrigen Formaldehydlösung innerhalb 30 Minuten bei einer Temperatur von 90°C zugetropft. Man rührt noch 60 Minuten bei 90°C nach.

*Anwendungsbeispiel XII*

Der erhaltene Gerbstoff wurde analog der im Beispiel I angegebenen Arbeitsweise eingesetzt. Das Ergebnis war ähnlich vorteilhaft.

*Beispiel 13*

75 Teile Chloressigsäure werden in 160 Teilen Wasser gelöst und mit 54 Teilen o-Toluidin und 80 Teilen 50%iger Natronlauge versetzt. Anschliessend werden auf 95°C aufgeheizt und 95 Teile Natriumdisulfit hinzugefügt. Nachdem 30 Minuten bei 95°C gehalten worden war, werden 200 Teile 30%ige Formaldehydlösung innerhalb von 120 Minuten zugetropft. Schliesslich wird noch 4 Stunden bei 95°C nachgerührt und das Produkt dann sprühgetrocknet.

*Anwendungsbeispiel XIII*

Der erhaltene Gerbstoff wurde analog der im Beispiel I angegebenen Arbeitsweise eingesetzt. Das Ergebnis war ähnlich vorteilhaft.

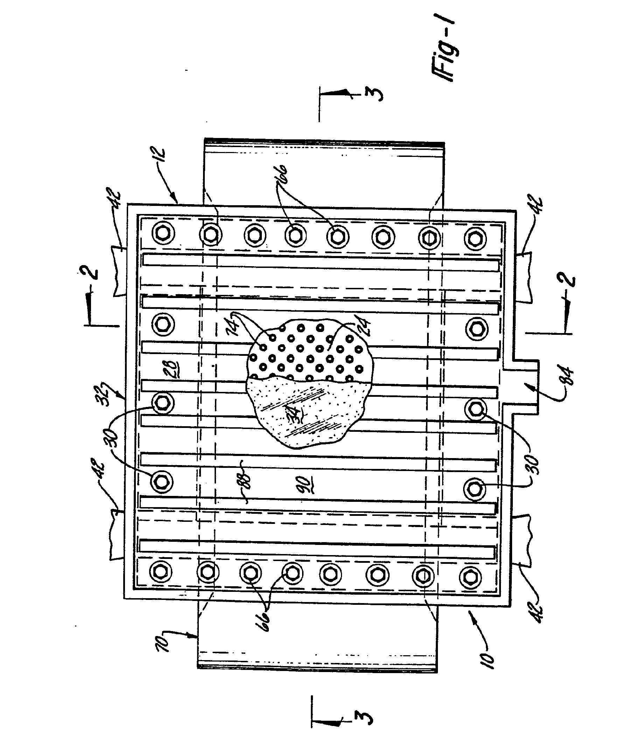

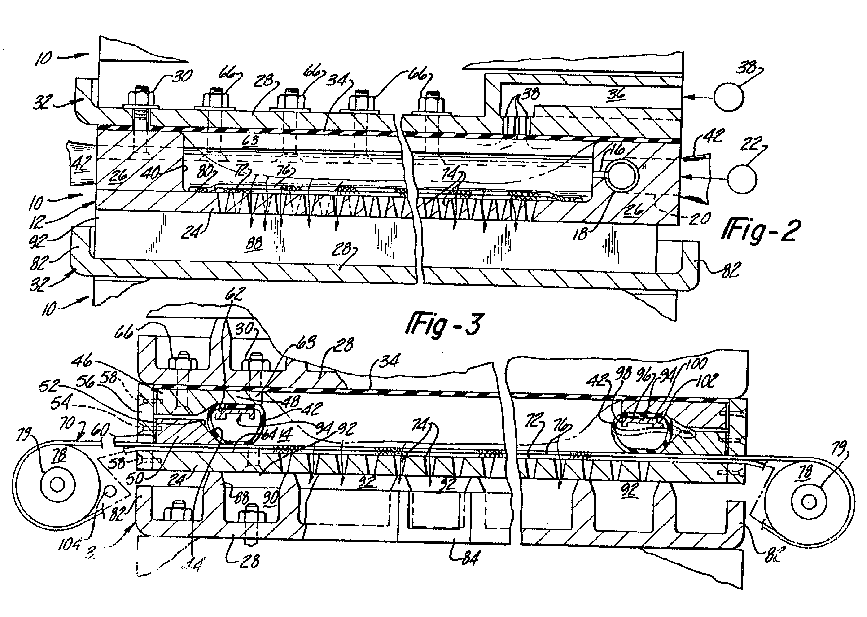

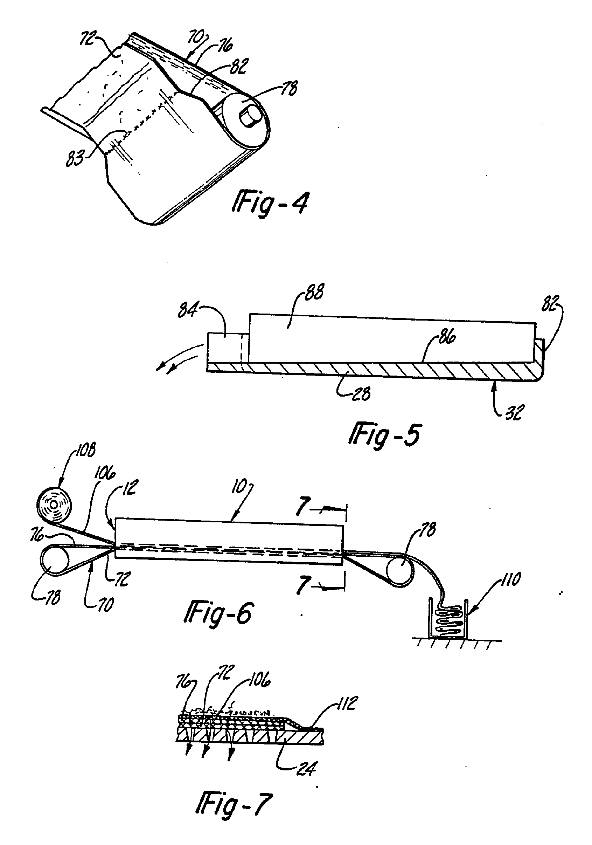

**Patentansprüche**

1. Verfahren zum Nachgerben und Färben von mineralisch gegerbten Ledern, dadurch gekennzeichnet, dass man amphotere Kondensationsprodukte der allgemeinen Formel I

$$
H_o - \underset{\underset{Y_p \quad Z_q}{\diagup \;\; \diagdown}}{\overset{\overset{X}{\mid}}{\underset{\mid}{\overset{R-N}{\underset{\mid}{A}}}}} - CH_2 \left[ (B-CH_2)_n - \underset{\underset{Y_p \quad Z_q}{\diagup \;\; \diagdown}}{\overset{\overset{X}{\mid}}{\underset{\mid}{\overset{N-R}{\underset{\mid}{A}}}}} - H_{o-1} \right]_m H \qquad (I)
$$

in der

A einen Benzol- oder Naphthylrest,

B einen Rest aus der Gruppe Harnstoff, Biuret, Dicyandiamid oder Melamin oder ein Gemisch dieser Reste,

X $-CH_2-COOH$, $CH_3-\overset{\mid}{CH}-COOH$, $CH_3-CH_2-\overset{\mid}{CH}-COOH$, $(CH_3)_2\overset{\mid}{C}-COOH$ oder $-CH_2-CH_2-COOH$,

R H, einen Alkylrest mit 1 bis 4 C-Atomen oder einen Rest der Formel X,

Y $-CH_2SO_3H$ oder $-SO_3H$,

Z einen Alkylrest mit 1 bis 4 C-Atomen oder einen Alkoxyrest mit 1 bis 4 C-Atomen,

m eine Zahl von 1 bis 10,

n eine Zahl von 1 bis 5,

p eine Zahl von 0 bis 2,

q eine Zahl von 0 bis 2

und o im Falle dass A ein Benzolrest ist, 4-(p+q) und im Falle dass A ein Naphthylrest ist 6-(p+q) bedeuten, oder deren Alkali- und Ammoniumsalze zusammen mit synthetischen Gerbstoffen auf Basis Phenolsulfonsäure, Naphthalinsulfonsäure und/oder Naphtholsulfonsäure und/oder einem anionischen Polymergerbstoff auf der Basis Acrylsäure, Maleinsäureanhydrid oder Methacrylsäure und deren Copolymerisaten mit anderen ethylenisch ungesättigten Monomeren zum Nachgerben von mineralisch gegerbten Ledern einsetzt und das Leder danach bei pH-Werten zwischen 3 bis 4,5 mit anionischen Farbstoffen färbt.

2. Verfahren nach Anspruch 1, dadurch gekennzeichnet, dass man amphotere Kondensationsprodukte der Formel I, in denen A einen Benzol-, B einen Harnstoffrest oder ein Gemisch aus einem Harnstoff- und einem Melaminrest,

X $-CH_2-COOH$ oder $CH_3-\overset{\mid}{CH}-COOH$,

R H,

Y $-CH_2SO_3H$, wobei p für die Zahl 1 steht, und

Z Methyl, wenn q 1 ist und Z ein Wasserstoffatom, wenn q 0 ist, bedeuten,

und deren Alkali- und Ammoniumsalze einsetzt.

**Claims**

1. A process for retanning and dyeing mineral tanned leather, wherein an amphoteric condensate of the general formula I

$$
H_o - \underset{\underset{Y_p \quad Z_q}{\diagup \;\; \diagdown}}{\overset{\overset{X}{\mid}}{\underset{\mid}{\overset{R-N}{\underset{\mid}{A}}}}} - CH_2 \left[ (B-CH_2)_n - \underset{\underset{Y_p \quad Z_q}{\diagup \;\; \diagdown}}{\overset{\overset{X}{\mid}}{\underset{\mid}{\overset{N-R}{\underset{\mid}{A}}}}} - H_{o-1} \right]_m H \qquad (I)
$$

where

A is a benzene or naphthyl radical,

B is a radical derived from the group consisting of urea, biuret, dicyanodiamide or melamine, or a mixture of these radicals,

X is $-CH_2-COOH$, $CH_3-\overset{\mid}{CH}-COOH$, $CH_3-CH_2-\overset{\mid}{CH}-COOH$, $(CH_3)_2\overset{\mid}{C}-COOH$ or $-CH_2-CH_2-COOH$,

R is H, alkyl of 1 to 4 carbon atoms or one of the radicals X,

Y is $-CH_2SO_3H$ or $-SO_3H$,

Z is alkyl of 1 to 4 carbon atoms or alkoxy of 1 to 4 carbon atoms,

m is from 1 to 10,

n is from 1 to 5,

p is from 0 to 2,

q is from 0 to 2, and

o is 4-(p+q) if A is a benzene radical, and is 6-(p+q) if A is a naphthyl radical,

or an alkali metal or ammonium salt thereof is employed together with a synthetic tanning agent based on phenolsulfonic acid, naphthalenesulfonic acid and/or naphtholsulfonic acid and/or an anionic polymeric tanning agent based on acrylic acid, maleic anhydride or methacrylic acid or copolymers thereof with other ethylenically unsaturated monomers, for retanning mineral tanned leather, and the leather is then dyed at pH 3 to 4.5 with an anionic dye.

2. A process as claimed in claim 1, wherein an amphoteric condensate of the formula I, where

A is a benzene radical,

B   is a urea radical or a mixture of a urea radical
with a melamine radical,

X   is -CH₂-COOH or CH₃-CH-COOH,
R   is H,
Y   is -CH₂SO₃H, p being 1, and
Z   is methyl if q is 1, and is hydrogen if q is 0,
or an alkali metal or ammonium salt thereof is employed.

## Revendications

1. Procédé de retannage et de teinture de cuirs tannés au moyen d'agents minéraux, caractérisé en ce que l'on utilise pour le retannage de cuirs tannés au moyen d'agents minéraux des produits de condensation amphothères de la formule générale I

dans laquelle
A   désigne un radical benzénique ou naphtyle,
B   un radical du groupe urée, biuret, dicyanodiamide ou mélamine ou un mélange de ces radicaux,

X   un groupement -CH₂-COOH, CH₃-CH-COOH,

CH₃-CH₂-CH-COOH, (CH₃)₂C-COOH ou -CH₂-CH₂-COOH,

R   un atome H, un radical alkyle contenant 1 à 4 atomes de carbone ou un radical de la formule X,
Y   un groupement -CH₂SO₃H ou -SO₃H,
Z   un radical alkyle contenant 1 à 4 atomes de carbone ou un radical alcoxy contenant 1 à 4 atomes de carbone,
m   un nombre de 1 à 10,
n   un nombre de 1 à 5,
p   un nombre de 0 à 2,
q   un nombre de 0 à 2,
et o, lorsque A est un radical benzénique, 4-(p + q) et, lorsque A est un radical napthyle, 6-(p + q),
ou les sels d'alcali et d'ammonium de ces produits conjointement avec des matières tannantes synthétiques à base d'acide phénolsulfonique, d'acide naphtalènesulfonique et/ou d'acide naphtolsulfonique et/ou avec une matière tannante polymère anionique à base d'acide acrylique, d'anhydride maléique ou d'acide méthacrylique et des copolymères de ceux-ci avec d'autres monomères éthyléniquement insaturés, et en ce que l'on teint ensuite le cuir à das pH compris entre 3 et 4,5 avec des matières colorantes anioniques.

2. Procédé suivant la revendication 1, caractérisé en ce que l'on utilise des produits de condensation amphotères de la formule I, dans lesquels A est un radical benzénique, B est un radical d'urée ou un mélange d'un radical d'urée et d'un radical de mélamine,

X   est -CH₂-COOH ou CH₃-CH-COOH,
R   est H,
Y   -est CH₂SO₃H, p représentant alors le nombre 1, et
Z   est le radical méthyle, lorsque q est égal à 1, et Z est un atome d'hydrogène, lorsque q est égal à 0, ainsi que les sels d'alcali et d'ammonium de ces produits.